# EUROPEAN PATENT APPLICATION

(11) **EP 4 726 892 A1**
(43) Date of publication of application: **15.04.2026**
(21) Application number: 25190777.0
(22) Date of filing: 21.07.2025
(51) Int. Cl.: H01M 50/291, H01M 10/6557, H01M 50/204, H01M 50/242, H01M 10/613, H01M 10/647, H01M 50/209

(54) **FACE-TO-FACE COOLING PLATE AND BATTERY PACK INCLUDING THE SAME**

(30) Priority: 11.10.2024 KR 20240138735
(71) Applicant: SAMSUNG SDI CO., LTD., Yongin-si, Gyeonggi-do 17084 (KR)
(72) Inventor: LEE, Gi Hun, 16678 Suwon-si (KR); CHOI, Seon Ung, 16678 Suwon-si (KR)
(74) Representative: Marks & Clerk LLP

(57) **Abstract**

The present disclosure relates to a face-to-face cooling plate and a battery pack including the same. The face-to-face cooling plate capable of absorbing displacement that occurs when a battery cell swells to prevent a sudden decrease in lifetime of a battery and prevent leakage of coolant that is caused by swelling compression. The face-to-face cooling plate includes a cooling chamber which is provided between battery cells and forms a space therein so that cooling fluid is circulated and a leakage prevention unit provided in the cooling chamber, and accommodates the cooling fluid when the battery cell swells.

## Description

### FIELD

The present disclosure relates to a face-to-face cooling plate and a battery pack including the same.

### BACKGROUND

Generally, recently, the demand for high energy density and high capacity secondary batteries is rapidly increasing due to the rapid spread of electronic devices that use batteries, such as mobile phones, laptop computers, electric vehicles, etc. Accordingly, research and development for improving the performance of lithium secondary batteries is being actively conducted.

A lithium secondary battery is a battery that includes a positive electrode and a negative electrode that contain active materials capable of intercalating and deintercalating lithium ions, and an electrolyte, and produces electrical energy through oxidation and reduction reactions when lithium ions are intercalated/deintercalated into/from positive and negative electrodes.

The above information disclosed in this Background section is provided for enhancement of understanding of the background of the present disclosure, and, therefore, it may contain information that does not constitute related (or prior) art.

### SUMMARY

The present disclosure is directed to providing a face-to-face cooling plate capable of accepting displacement that occurs to prevent a sudden decrease in lifetime of a battery and prevent leakage of coolant that is caused by swelling compression when a battery cell swells, and a battery pack including the same.

These and other aspects and features of the present disclosure will be described in or will be apparent from the following description of some embodiments of the present disclosure.

According to an aspect of the present disclosure, there is provided a face-to-face cooling plate which includes a cooling chamber which is provided between battery cells and forms a space therein so that a cooling fluid is circulated and a leakage prevention unit which is provided in the cooling chamber, and accommodates the cooling fluid when a battery cell swells.

The cooling chamber may include a pair of support plates disposed to be spaced apart from one another, and guide ribs formed on inner surfaces of the support plates.

The guide ribs may include a first guide rib formed to protrude from the inner surface of the support plate at one side, and a second guide rib formed to protrude from the inner surface of the support plate at the other side, and the first guide rib and the second guide rib may be formed to protrude in an alternating manner.

A length of the guide rib(s) may be reduced toward a central portion of the battery cell.

The leakage prevention unit may include an accommodation portion configured to form an independent space inside the cooling chamber, and an accommodation operation portion configured to open the accommodation portion so that the cooling fluid is accommodated in the accommodation portion when the battery cell swells.

The accommodation operation portion may include a partition that connects inner facing surfaces of the cooling chamber to be broken by pressure generated when the battery cell swells.

A notch may be formed in the partition.

A thickness of the partition may be reduced toward the notch.

The notch may be formed to have a zigzag shape.

An uneven portion may be formed on the partition so that a leakage hole is formed when the partition is broken by the notch.

The uneven portion may be formed on upper and lower surfaces of the partition substantially symmetrically with respect to the notch, and an inclined surface may be formed to guide a broken portion of the partition when the partition is broken by the notch.

An upper end of the accommodation portion may be rounded, and the accommodation portion may be disposed to correspond to a cap plate of the battery cell.

A reinforcing rib that corresponds to a welding portion of the cap plate and crosses the accommodation portion may be formed inside the accommodation portion.

A thickness of the upper end of the accommodation portion may be greater than a thickness of the support plate.

According to another aspect of the present disclosure, there is provided a battery pack which includes a housing, a plurality of battery cells disposed in the housing, and one or more of the face-to-face cooling plates according to an aspect of the present disclosure that are disposed between the plurality of battery cells.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a configuration of a battery pack according to embodiments of the present disclosure;
FIG. 2 is a cross-section view taken along line II-II of FIG. 1;
FIG. 3 is an exploded perspective view schematically illustrating the configuration of the battery pack according to embodiments of the present disclosure;
FIG. 4 is a perspective view schematically illustrating a configuration of a battery cell according to embodiments of the present disclosure;
FIG. 5 is a cross-section view taken along line V-V of FIG. 4;
FIG. 6 is a view schematically illustrating a configuration of an electrode assembly according to embodiments of the present disclosure;
FIG. 7 is an enlarged view of portion VII of FIG. 2 illustrating a guide rib of a face-to-face cooling plate according to embodiments of the present disclosure;
FIG. 8 is an enlarged view of portion VIII of FIG. 2 illustrating an accommodation portion of the face-to-face cooling plate according to embodiments of the present disclosure;
FIG. 9 is a view for describing an operation of the face-to-face cooling plate according to embodiments of the present disclosure;
FIG. 10 is a graph showing a swelling force caused by the face-to-face cooling plate according to embodiments of the present disclosure;
FIG. 11 is a graph showing overall cell stack elongation caused by the face-to-face cooling plate according to embodiments of the present disclosure;
FIG. 12 is an enlarged view of portion XII of FIG. 9;
FIG. 13 is a cross-section view schematically illustrating a face-to-face cooling plate according to embodiments of the present disclosure;
FIG. 14 is a perspective view schematically illustrating the face-to-face cooling plate according to embodiments of the present disclosure;
FIG. 15 is a view for describing an operation of the face-to-face cooling plate according to embodiments of the present disclosure;
FIG. 16 is a cross-section view schematically illustrating a face-to-face cooling plate (with a notch) according to embodiments of the present disclosure;
FIG. 17 is a cross-section view schematically illustrating a face-to-face cooling plate (with a reinforcing rib) according to embodiments of the present disclosure; and
FIG. 18 is a view illustrating a modified example of the reinforcing rib of the face-to-face cooling plate according to embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

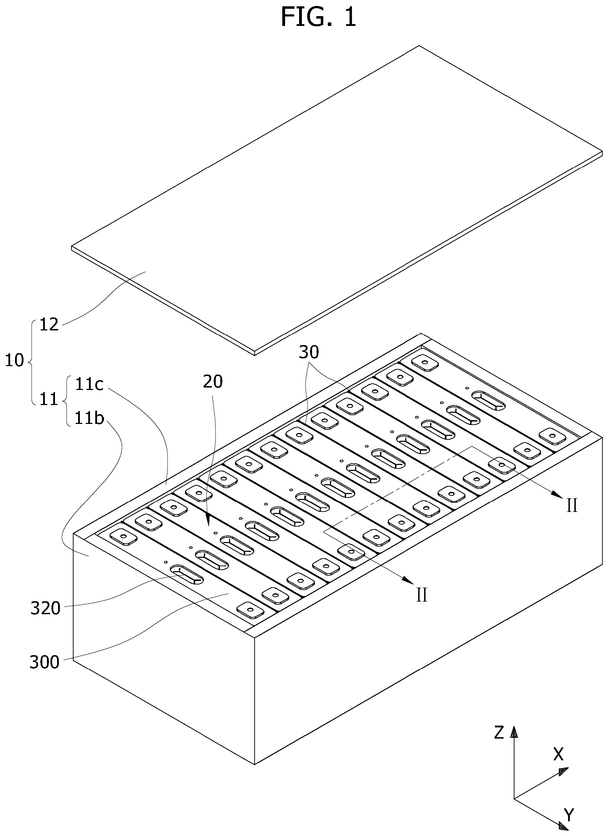

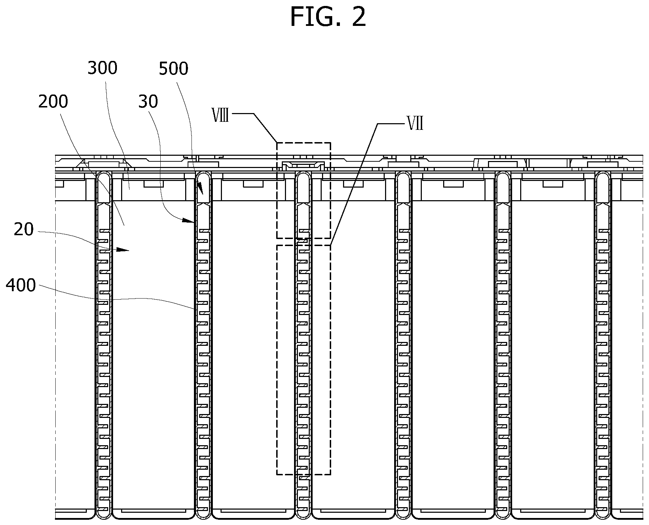

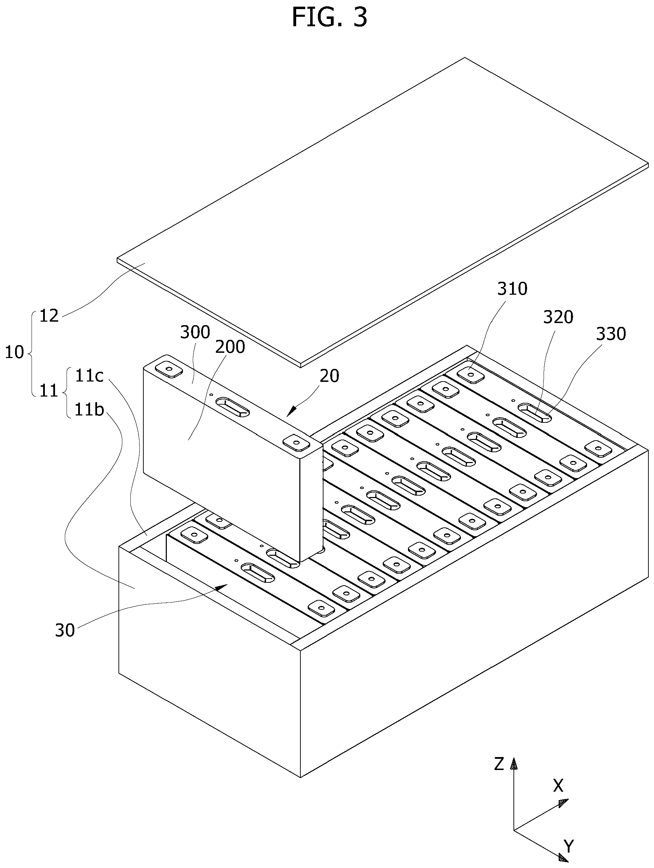

FIG. 1 is a perspective view schematically illustrating a configuration of a battery pack according to embodiments of the present disclosure, FIG. 2 is a cross-section view taken along line II-II of FIG. 1, and FIG. 3 is an exploded perspective view schematically illustrating the configuration of the battery pack according to embodiments of the present disclosure.

Hereinafter, a first direction to be described below may be exemplified as a direction parallel to an X-axis with respect to FIG. 1, a second direction may be exemplified as a direction parallel to a Y-axis with respect to FIG. 1, and a third direction may be exemplified as a direction parallel to a Z-axis with respect to FIG. 1.

Referring to FIGS. 1 to 3, the battery pack according to embodiments may include a housing 10, a battery cell 20, and a face-to-face cooling plate 30.

The housing 10 may function as a component that supports the battery cells 20 and protects the battery cells 20 from external impact and foreign substances. The housing 10 may provide a space for accommodating the battery cells 20 therein.

The housing 10 may include a housing body 11 and a housing cover 12.

The housing body 11 may be formed to have a shape of a box with an empty interior and one open side. For example, the open side of the housing body 11 may be disposed to face upwardly with respect to FIG. 1. A shape of a cross section of the housing body 11 is not limited to the quadrangular shape illustrated in FIG. 1, and may be changed to various shapes such as a polygonal shape, a circular shape, an elliptical shape, and the like.

The housing body 11 according to the present embodiment may include a bottom plate 11a, an end plate 11b, and a side plate 11c.

The bottom plate 11a may form a lower exterior of the housing body 11.

The bottom plate 11a according to the present embodiment may be formed to have a substantially flat plate shape. The bottom plate 11a may be disposed perpendicular to the third direction.

The end plate 11b may extend from the bottom plate 11a and form a portion of a side exterior of the housing body 11.

The end plate 11b according to the present embodiment may be formed to have a shape of a flat plate extending from the bottom plate 11a in a direction parallel to the third direction. A lower end portion of the end plate 11b may be connected to an edge of the bottom plate 11a that is disposed parallel to the second direction. The end plate 11b may be disposed perpendicular to the first direction.

The end plate 11b may be provided as a pair of end plates 11b. The pair of end plates 11b may be disposed to face each other in the first direction.

The side plates 11c may extend from the bottom plate 11a to form remaining portions of the side exterior of the housing body 11.

The side plate 11c according to embodiments may be formed to have a flat plate extending from the bottom plate 11a in the direction parallel to the third direction. A lower end portion of the side plate 11c may be connected to an edge of the bottom plate 11a that is disposed parallel to the first direction. The side plate 11c may be disposed perpendicular to the second direction. The side plate 11c may be provided as a pair of side plates 11c. The pair of side plates 11c may be disposed to face each other in the second direction.

The housing cover 12 may be coupled to the housing body 11 and close the internal space of the housing body 11. For example, the housing cover 12 may be formed to have a substantially plate shape. The housing cover 12 may be disposed to face an upper surface of the housing body 11, that is, upper end portions of the end plates 11b and side plates 11c. The housing cover 12 may be fixed to the upper end portions of the end plates 11b and side plates 11c using various types of coupling methods such as bolting, welding, fitting, and the like.

The battery cell 20 may function as a unit structure that stores and supplies power in a battery module. The battery cell 20 may be disposed inside the housing 10.

The battery cell 20 may be provided as a plurality of battery cells 20. The plurality of battery cells 20 may be arranged in a plurality of columns inside the housing 10. For example, the plurality of battery cells 20 may be arranged in a plurality of columns in the first direction inside the housing body 11. However, the arrangement of the plurality of battery cells 20 is not limited thereto, and the plurality of battery cells 20 may be arranged in a plurality of columns in the second direction inside the housing body 11 or may be arranged in a plurality of columns in the first and second directions.

The plurality of battery cells 20 may be connected to each other in series or in parallel by electrical connecting units such as bus bars or the like.

Hereinafter, an example in which the battery cell 20 is a lithium ion secondary battery and has a prismatic shape will be described. However, the present disclosure is not limited thereto, and the battery cell 20 may be a lithium polymer battery or a cylindrical battery.

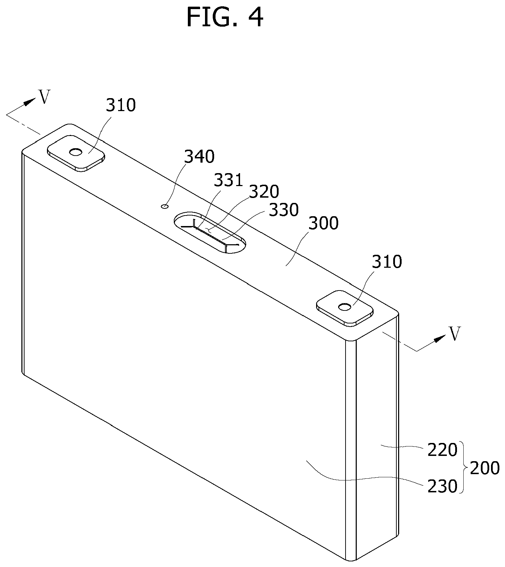

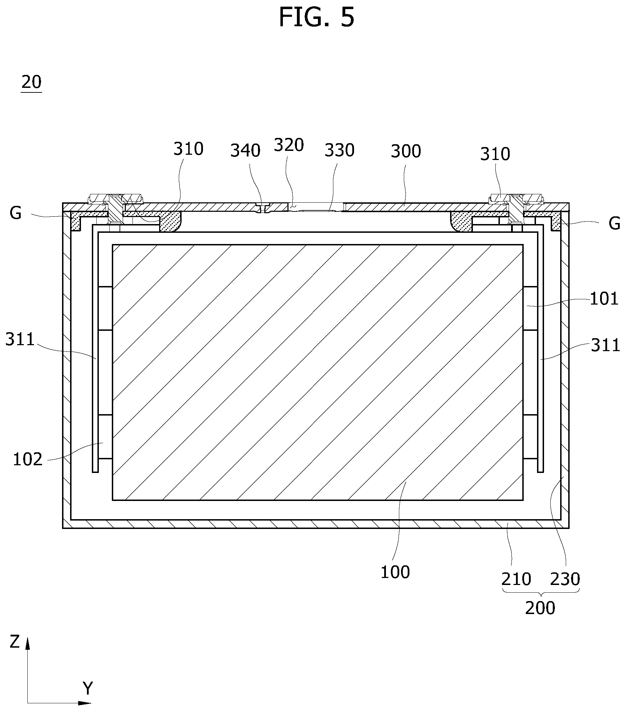

FIG. 4 is a perspective view schematically illustrating a configuration of the battery cell according to embodiments of the present disclosure, and FIG. 5 is a cross-section view taken along line V-V of FIG. 4.

Referring to FIGS. 1 to 5, the battery cell 20 according to embodiments includes an electrode assembly 100, a cell case 200, and a cap plate 300.

The electrode assembly 100 may function as a unit structure that performs an operation of charging or discharging power in the battery cell 20. The electrode assembly 100 may be accommodated inside the cell case 200.

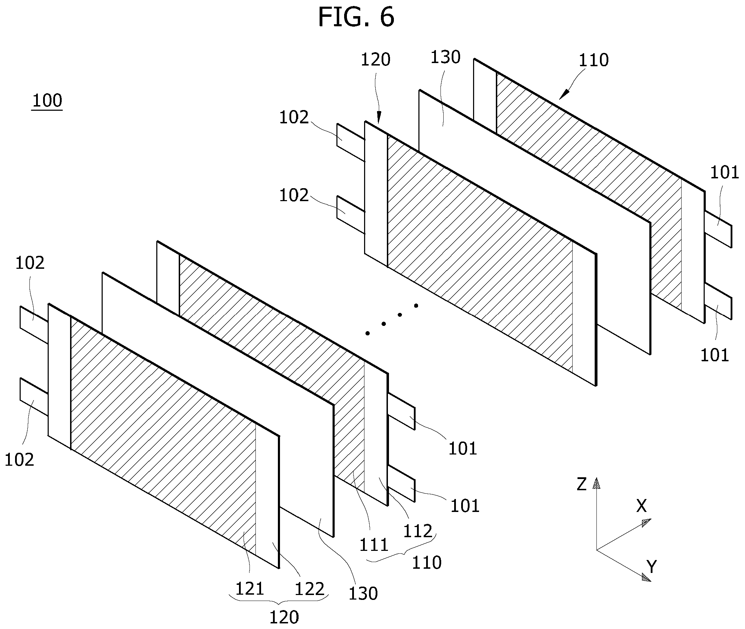

FIG. 6 is a view schematically illustrating a configuration of the electrode assembly according to embodiments of the present disclosure.

Referring to FIG. 6, the electrode assembly 100 according to the present embodiment may include a first electrode 110, a second electrode 120, and a separator 130.

Hereinafter, an example in which the electrode assembly 100 is formed in the form of a stack in which a plurality of first electrodes 110, a plurality of second electrodes 120, and a plurality of separators 130 are alternately stacked in the first direction will be described. However, the electrode assembly 100 is not limited thereto, and may be formed in in the form of a roll in which the first electrodes 110, the second electrodes 120, and the separators 130 are wound around a winding axis in a state of being sequentially stacked.

The first electrode 110 may function as a positive electrode of the electrode assembly 100.

The first electrode 110 according to the present embodiment may be formed to have a shape of a foil containing a metal material such as aluminum or an aluminum alloy. Both surfaces of the first electrode 110 may be disposed perpendicular to the first direction. The type, size, shape, etc., of the first electrode 110 are not particularly limited as long as it is conductive and does not cause a chemical change in the battery cell 20. A shape of a cross section of the first electrode 110 may be changed to various shapes other than a rectangular shape.

The first electrode 110 may be provided as a plurality of first electrodes 110. The plurality of first electrodes 110 may be arranged in the first direction. The number of first electrodes 110 may be variously changed depending on the charging capacity of the battery cell 20 and the like.

The first electrode 110 may include a first active material layer 111.

The first active material layer 111 may be provided in a form that is applied to at least a portion of the first electrode 110. The first active material layer 111 may be applied to both surfaces of the first electrode 110, or alternatively, may be applied only to one surface of the first electrode 110.

In embodiments, as the first electrode 110 functions as a positive electrode, the first active material layer 111 may include a positive electrode active material.

The positive electrode active material may be a compound capable of reversible intercalation and deintercalation of lithium (lithiated intercalation compound). More specifically, one or more composite oxides of a metal selected from among cobalt, manganese, nickel, iron, and combinations thereof, and lithium may be used.

For example, the positive electrode active material may include at least one of lithium-iron-phosphorus oxide (LFP) (LiFePO₄), lithium-manganese-iron-phosphorus oxide (LMFP) (LiMnFePO₄), and lithium-nickel-cobalt-manganese oxide (NCM) (LiNiₓCo_{y}Mn_{z}O₂). Here, 0<x<1, 0<y<1, 0<z<1, and x+y+z=1 may be satisfied. The positive electrode active material may include only any one of LFP (LiFePO₄), LMFP (LiMnFePO₄), and NCM (LiNiₓCo_{y}Mn_{z}O₂), or may include two or all of LFP (LiFePO₄), LMFP (LiMnFePO₄), and NCM (LiNiₓCo_{y}Mn_{z}O₂).

The first active material layer 111 may further include a positive electrode conductive material.

The positive electrode conductive material is used to provide conductivity to the first active material layer 111, and any material as long as it does not cause chemical change and is electronically conductive may be used. Examples of the positive electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives and the like, or mixtures thereof.

The first active material layer 111 may further include a positive electrode binder.

The positive electrode binder serves to attach particles constituting the positive electrode active material to each other well and also to attach the positive electrode active material to the first electrode 110.

Examples of the positive electrode binder may include non-aqueous binders, aqueous binders, dry binders, or combinations thereof.

Examples of the non-aqueous binder may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from among styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and combinations thereof.

When an aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used.

The dry binder is a fiberizable polymeric material, and may be, for example, polytetrafluoroethylene, polyvinylidene fluoride, polyvinylidene fluoridehexafluoropropylene copolymer, polyethylene oxide, or a combination thereof.

The first electrode 110 may include a first non-coated portion 112 to which the first active material layer 111 is not applied. The first non-coated portion 112 according to the present embodiment may be disposed in a region of one end portion of the first electrode 110 facing the second direction. However, the first non-coated portion 112 is not limited to this form, and may also be formed over an entire edge region of the first electrode 110.

The second electrode 120 may function as a negative electrode of the electrode assembly 100.

The second electrode 120 according to the present embodiment may be formed to have a shape of a foil containing a metal material such as copper, a copper alloy, nickel, or a nickel alloy. Both surfaces of the second electrode 120 may be disposed perpendicular to the first direction. The type, size, shape, etc., of the second electrode 120 are not particularly limited as long as it is conductive and does not cause a chemical change in the battery cell 20. A shape of a cross section of the second electrode 120 may be changed to various shapes other than the rectangular shape illustrated in FIG. 4.

The second electrode 120 may be provided as a plurality of plurality of second electrodes 120. The plurality of second electrodes 120 may be arranged in the first direction. The plurality of first electrodes 110 and the plurality of second electrodes 120 may be arranged alternately in the first direction.

The second electrode 120 may include a second active material layer 121 and a second non-coated portion 122.

The second active material layer 121 may be provided in a form that is applied to at least a portion of the second electrode 120. The second active material layer 121 may be applied to both surfaces of the second electrode 120, or alternatively, may be applied only to one surface of the second electrode 120.

As the second electrode 120 functions as a negative electrode, the second active material layer 121 may include a negative electrode active material.

The negative electrode active material may include a material capable of reversibly intercalating/de-intercalating lithium ions, such as a lithium metal, an alloy of lithium metal, a material capable of doping and de-doping lithium, or a transition metal oxide.

The material capable of reversibly intercalating/de-intercalating lithium ions may include a carbon-based negative electrode active material, for example, crystalline carbon, amorphous carbon, or combinations thereof. Examples of crystalline carbon may include graphite, such as natural or artificial graphite in irregular shaped, plate-like, flake-like, spherical, or fiber-like form, and examples of amorphous carbon may include soft or hard carbon, mesophase pitch carbide, calcined coke, etc.

As an alloy of lithium metal, an alloy of lithium and a metal selected from among Na, K, Rb, Cs, Fr, Be, Mg, Ca, Sr, Si, Sb, Pb, In, Zn, Ba, Ra, Ge, Al, and Sn may be used.

As the material capable of doping and de-doping lithium, a Si-based negative electrode active material or a Sn-based negative electrode active material may be used. Examples of the Si-based negative electrode active material may include silicon, a silicon-carbon composite, SiOx (0<x<2), a Si-Q alloy (wherein Q is selected from among an alkali metal, an alkaline earth metal, a Group 13 element, a Group 14 element (excluding Si), a Group 15 element, a Group 16 element, a transition metal, a rare earth element, and combinations thereof), or combinations thereof. Examples of the Sn-based negative electrode active material may include Sn, SnO2, a Sn-based alloy, or combinations thereof.

The silicon-carbon composite may be a composite of silicon and amorphous carbon. According to one embodiment, the silicon-carbon composite may be in the form of silicon particles and in the form of silicon particles of which the surface is coated with amorphous carbon. For example, the silicon-carbon composite may include secondary particles (cores) in which silicon primary particles are assembled and an amorphous carbon coating layer (shell) positioned on the surface of the secondary particles. The amorphous carbon may also be positioned between the silicon primary particles, so that, for example, the silicon primary particles may be coated with the amorphous carbon. The secondary particles may be dispersed and present in an amorphous carbon matrix.

The silicon-carbon composite may further include crystalline carbon. For example, the silicon-carbon composite may include a core comprising crystalline carbon and silicon particles and an amorphous carbon coating layer positioned on the surface of the core.

The Si-based negative electrode active material or the Sn-based negative electrode active material may be used by being mixed with a carbon-based negative electrode active material.

The second active material layer 121 may further include a negative electrode conductive material and a negative electrode binder.

The negative electrode conductive material is used to provide conductivity to the second active material layer 121, and any material as long as it does not cause chemical change and is electronically conductive may be used. Examples of the positive electrode conductive material may include carbon-based materials such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, etc., conductive polymers such as polyphenylene derivatives and the like, or mixtures thereof.

The negative electrode binder serves to attach particles constituting the negative electrode active material to each other well and also to attach the negative electrode active material to the second electrode 120.

Examples of the negative electrode binder may include non-aqueous binders, aqueous binders, dry binders, or combinations thereof.

Examples of the non-aqueous binder may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from among styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and combinations thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used.

The dry binder is a fiberizable polymeric material, and may be, for example, polytetrafluoroethylene, polyvinylidene fluoride, polyvinylidene fluoridehexafluoropropylene copolymer, polyethylene oxide, or a combination thereof.

The second electrode 120 may include the second non-coated portion 122 to which the second active material layer 121 is not applied. The second non-coated portion 122 according to embodiments may be disposed in a region of one end portion of the second electrode 120. However, the second non-coated portion 122 is not limited to this form, and may also be formed over an entire edge region of the second electrode 120.

The separator 130 may be disposed between the first electrode 110 and the second electrode 120. The separator 130 may perform a function for preventing a short circuit between the first electrode 110 and the second electrode 120 while allowing the movement of lithium ions between the first electrode 110 and the second electrode 120. The separator 130 may be disposed to surround an entirety of a surface region of the electrode assembly 100. Accordingly, the separator 130 may prevent the first electrode 110 and the second electrode 120 from being directly exposed to the outside of the electrode assembly 100.

As the separator 130, polyethylene, polypropylene, or polyvinylidene fluoride, or a multilayer film of two or more layers thereof may be used, or a mixed multilayer film such as a polyethylene/polypropylene two-layer separator, a polyethylene/polypropylene/polyethylene three-layer separator, a polypropylene/polyethylene/polypropylene three-layer separator, etc., may be used.

Examples of the separator 130 may include a porous base substrate, and a coating layer including an organic material, an inorganic material, or a combination thereof positioned on one or both surfaces of the porous base substrate.

The porous base substrate may be a polymer film formed of any one polymer selected from among polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, Teflon, and polytetrafluoroethylene, or a polymer film formed of a copolymer or mixture of two or more thereof.

The organic substance may include a polyvinylidene fluoride-based polymer or a (meth)acrylic-based polymer.

The inorganic substance may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but the present disclosure is not limited thereto.

The organic and inorganic substances may be mixed and present in a single coating layer, or may be present in a form in which a coating layer containing an organic substance and a coating layer containing an inorganic substance are stacked.

The electrode assembly 100 according to the present embodiment may further include a first tab 101 and a second tab 102.

The first tab 101 may be connected to the first electrode 110.

The first tab 101 according to the present embodiment may have a shape of a foil extending in a direction parallel to the second direction from the first non-coated portion 112 of the first electrode 110. The first tab 101 may have a substantially rectangular shape. However, the shape of the first tab 101 is not limited thereto, and may be changed to various shapes.

The first tab 101 may be formed integrally with the first electrode 110. For example, the first tab 101 may be a remaining region of the first non-coated portion 112 that remains after a portion of the first non-coated portion 112 is cut or removed by notching processing or the like. Alternatively, the first tab 101 may be manufactured separately from the first electrode 110 and then connected to the first non-coated portion 112 by welding or the like. The material of the first tab 101 may be the same as the material of the first electrode 110.

The first tab 101 may be provided as a plurality of first tabs 101. The respective first tabs 101 may individually extend from first non-coated portions 112 of different first electrodes 110. Adjacent first tabs 101 may be arranged to face each other in the first direction. That is, the plurality of first tabs 101 may be arranged in the first direction. The adjacent first tabs 101 may be arranged parallel to each other. The adjacent first tabs 101 may be in contact with each other, or may be spaced a thickness of the separator 130 from each other.

The plurality of first tabs 101 may be provided in each first electrode 110. For example, one pair of first tabs 101 may be formed in each first electrode 110. The pair of first tabs 101 formed in each first electrode 110 may be arranged in the third direction.

The second tab 102 may be connected to the first electrode 110.

The second tab 102 according to embodiments may have a shape of a foil extending in the direction parallel to the second direction from the second non-coated portion 122 of the second electrode 120. The extension directions of the first tab 101 and second tab 102 may be opposite to each other. The second tab 102 may have a substantially rectangular shape. However, the shape of the second tab 102 is not limited thereto, and may be changed to various shapes.

The second tab 102 may be formed integrally with the second electrode 120. For example, the second tab 102 may be a remaining region of the second non-coated portion 122 that remains after a portion of the second non-coated portion 122 is cut or removed by notching processing or the like. Alternatively, the second tab 102 may be manufactured separately from the second electrode 120 and then connected to the second non-coated portion 122 by welding or the like. The material of the second tab 102 may be the same as the material of the second electrode 120.

The second tab 102 may be provided as a plurality of second tabs 102. The respective second tabs 102 may individually extend from second non-coated portions 122 of different second electrode 120. Adjacent second tabs 102 may be arranged to face each other in the first direction. That is, the plurality of second tabs 102 may be arranged in the first direction. The adjacent second tabs 102 may be arranged parallel to each other. The adjacent second tabs 102 may be in contact with each other, or may be spaced the thickness of the separator 130 from one another.

The plurality of second tabs 102 may be provided in each second electrode 120. For example, one pair of second tabs 102 may be formed in each second electrode 120. The pair of second tabs 102 formed in each second electrode 120 may be arranged in the third direction.

The cell case 200 may from a schematic exterior of the battery cell 20 and accommodate the electrode assembly 100. The cell case 200 may include a conductive metal material such as aluminum, an aluminum alloy, or nickel-plated steel.

The cell case 200 according to the present embodiment may include a bottom portion 210, a rear portion 220, and a side portion 230.

The bottom portion 210 may form a lower exterior of the cell case 200. The bottom portion 210 according to embodiments may have a shape of a rectangular plate. The bottom portion 210 may be disposed to face the bottom plate 11a of the housing body 11. The bottom portion 210 may be disposed to face the bottom plate 11a in the third direction.

The rear portion 220 may extend from the bottom portion 210 and form a portion of a side exterior of the cell case 200.

The rear portion 220 according to embodiments may have a shape of a rectangular plate extending from the bottom portion 210 in the direction parallel to the third direction. A lower end portion of the rear portion 220 may be connected to an edge of the bottom portion 210 that is disposed parallel to the second direction. The rear portion 220 may be disposed perpendicular to the first direction. An end portion of the rear portion 220 may be disposed to face the housing cover 12.

The rear portion 220 may be provided as a pair of rear portions 220. The pair of rear portions 220 may be disposed to face one another in the first direction so as to be spaced a predetermined interval from one another. The pair of rear portions 220 may be disposed parallel to one another. The respective rear portions 220 may be disposed to face inner side surfaces of different end plates 11b inside the housing body 11.

The side portion 230 may extend from the bottom portion 210 and form a remaining portion of the side exterior of the cell case 200.

The side portion 230 according to the present embodiment may have a shape of a rectangular plate extending from the bottom portion 210 in the direction parallel to the third direction. A lower end portion of the side portion 230 may be connected to an edge of the bottom portion 210 that is disposed parallel to the first direction. The side portion 230 may be disposed cross the rear portion 220. For example, the side portion 230 may be disposed perpendicular to the second direction. An end portion of the side portion 230 may be disposed to face the housing cover 12. An area of the side portion 230 may be smaller than an area of the rear portion 220.

The side portion 230 may be provided as a pair of side portions 230. The pair of side portions 230 may be disposed to face each other in the second direction so as to be spaced a predetermined interval from each other. The pair of side portions 230 may be disposed parallel to one another. The respective side portion 230 may be disposed to face inner side surfaces of different side plates 11c inside the housing body 11.

Accordingly, the cell case 200 according to embodiments may be formed to have a rectangular parallelepiped shape with an open upper end portion facing the housing cover 12.

The cap plate 300 may be coupled to the cell case 200 and seal the cell case 200.

The cap plate 300 according to embodiments may be formed to have a flat plate shape. The cap plate 300 may be disposed to face the cell case 200 in the third direction. For example, the cap plate 300 may be disposed to face an open upper surface of the cell case 200. The cap plate 300 may be disposed parallel to the bottom portion 210 of the cell case 200.

The cap plate 300 may be mounted on upper end portions of the rear portion 220 and side portion 230. Alternatively, the cap plate 300 may be inserted into an inside of the cell case 200 and a circumferential surface of the cap plate 300 may be in contact with inner side surfaces of the rear portion 220 and side portion 230. The cap plate 300 may be coupled to the upper end portions of the rear portion 220 and side portion 230 using various types of coupling methods such as welding, bolting, fitting, and the like.

The cap plate 300 may include a terminal 310 electrically connected to the electrode assembly 100.

The terminal 310 may pass through the cap plate 300 in the third direction. An upper end portion of the terminal 310 may protrude outwardly from the cap plate 300 and a lower end portion of the terminal 310 may protrude inwardly from the cell case 200. A specific shape of the terminal 310 is not limited to the shape illustrated in FIGS. 1 to 6, and may be changed to various shapes.

The terminal 310 may be formed of an electrically conductive material such as aluminum, nickel, copper, etc.

The terminal 310 may be provided as a pair of terminals 310. The pair of terminals 310 may be disposed on the cap plate 300 in the second direction to be spaced a predetermined interval from each other.

The terminal 310 may be electrically connected by a current collector 311. The pair of terminals 310 may be individually connected to the first electrode 110 and second electrode 120 of the electrode assembly 100. Accordingly, the pair of terminals 310 may each function as positive and negative electrode terminals of the battery cell 20.

For example, any one of the pair of terminals 310 may be connected to a current collector 311 bonded to the first tab 101. Further, the other of the pair of terminals 310 may be connected to a current collector 311 bonded to the second tab 102. However, the present disclosure is not limited thereto, and the pair of terminals 310 may be directly connected to the first tab 101 and the second tab 102.

An insulator G may be installed between the electrode assembly 100 and the cap plate 300. The insulator G may be provided as a pair of insulators G. The pair of insulators G may be spaced apart from each other in the second direction between the electrode assembly 100 and the cap plate 300. The pair of insulators G may be disposed to individually surround different terminals 310. The insulators G may be formed of an insulating material such as polyethylene (PE), polypropylene (PP), polyethylene terephthalate (PET), rubber, etc.

The cap plate 300 may further include a vent hole 320 and a vent plate 330.

The vent hole 320 may be formed to have a shape of a hole passing through the cap plate 300 in the third direction. The vent hole 320 may function as a component that provides a path for flames, gas, smoke, etc., formed inside the cell case 200 to be discharged from the battery cell 20 when thermal runaway occurs in the battery cell 20. A lower side of the vent hole 320 may be connected to an internal space of the cell case 200. An upper side of the vent hole 320 may be connected to an external space of the cap plate 300. A shape of a cross section of the vent hole 320 may be changed to various shapes such as an elliptical shape, a circular shape, a polygonal shape, and the like.

The vent plate 330 may be opened or closed in response to a change in internal pressure of the cell case 200. That is, the vent plate 330 may seal the cell case 200 by being maintained in a closed state during normal operation of the battery cell 20. When the internal pressure of the cell case 200 is increased to a set value or more due to overcharging, fire, etc. of the cell case 200, the vent plate 330 may open and discharge the generated flames, gas, smoke, etc., from the inside of the cell case 200 to the outside of the cell case 20.

The vent plate 330 according to the present embodiment may be formed to have a flat plate shape. The vent plate 330 may be disposed to face the vent hole 320 in the third direction. A thickness of the vent plate 330 may be smaller than a thickness of the cap plate 300. An area of the vent plate 330 may be greater than an area of a cross section of the vent hole 320. An upper surface of the vent plate 330 may be coupled to a lower surface of the cap plate 300 using various types of coupling methods such as welding, bolting, fitting, and the like. Alternatively, the vent plate 330 may be inserted into an inside of the vent hole 320, and a circumferential surface of the vent plate 330 may be coupled to an inner side surface of the vent hole 320.

A vent notch 331 for guiding a rupturing operation of the vent plate 330 may be formed in the vent plate 330. The vent notch 331 according to the present embodiment may have a shape of a groove that is concavely recessed from an outer side surface of the vent plate 330 to an inner side of the vent plate 330. The shape of the vent notch 331 is not limited to the shape illustrated in FIG. 3, and the vent notch 331 may be formed to form various patterns on the vent plate 330.

The cap plate 300 may further include an electrolyte injection port 340 in which a sealing stopper may be installed.

The face-to-face cooling plate 30 according to the present embodiment may function as a component that is disposed between the battery cells 20 and maintains the heat control performance of the battery cell 20. Further, the face-to-face cooling plate 30 may function as a component that can accept swelling displacement of the battery cells 20.

For example, the face-to-face cooling plate 30 may include a cooling chamber 400.

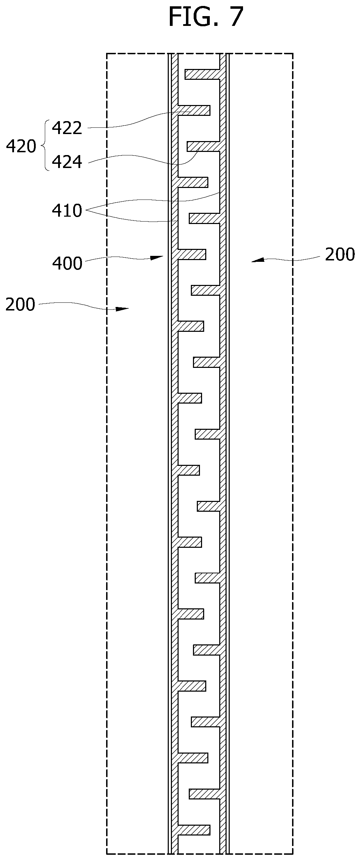

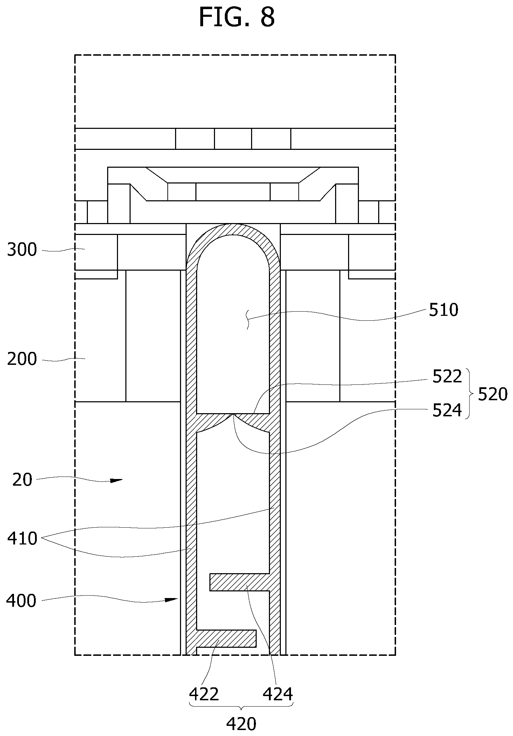

FIG. 7 is an enlarged view of portion VII of FIG. 2 illustrating a guide rib of a face-to-face cooling plate according to embodiments of the present disclosure, and FIG. 8 is an enlarged view of portion VIII of FIG. 2 illustrating an accommodation portion of the face-to-face cooling plate according to embodiments of the present disclosure.

Referring to FIGS. 7 and 8, the cooling chamber 400 may function as a component that is disposed between battery cells 20 and forms a space therein so that cooling fluid is circulated.

The cooling chamber 400 may include a pair of support plates 410 disposed to be spaced apart from one another and a guide rib 420 formed on an inner surface of the support plate 410.

The respective battery cells 20 may be disposed to be spaced a certain interval from each other, and the cooling chamber 400 may be provided between the respective battery cells 20. That is, the support plate 410 at one side is disposed to be in contact with a side surface of a battery cell 20 at one side, and the support plate 410 at the other side is disposed to be in contact with a side surface of a battery cell 20 at the other side.

The guide rib 420 may be formed to protrude from the inner surface of the support plate 410. More specifically, the guide rib 420 may include a first guide rib 422 formed to protrude from the inner surface of the support plate 410 at one side, and a second guide rib 424 formed to protrude from the inner surface of the support plate 410 at the other side.

The first guide rib 422 and the second guide rib 424 may be formed to protrude in an alternating manner. Each first guide rib 422 and second guide rib 424 may extend to the inner surface of the support plate 410 facing corresponding one, and may extend to the inner surface of the support plate 410 facing the corresponding one by a certain spaced distance.

Referring to FIG. 7, the guide rib 420 may be formed to have a length being reduced toward a central portion of the battery cell 20.

This is for effectively absorbing the expansion of the central portion of the battery cells 20 by reducing the length of the guide rib 420 as it goes toward the central portion of the guide rib 420.

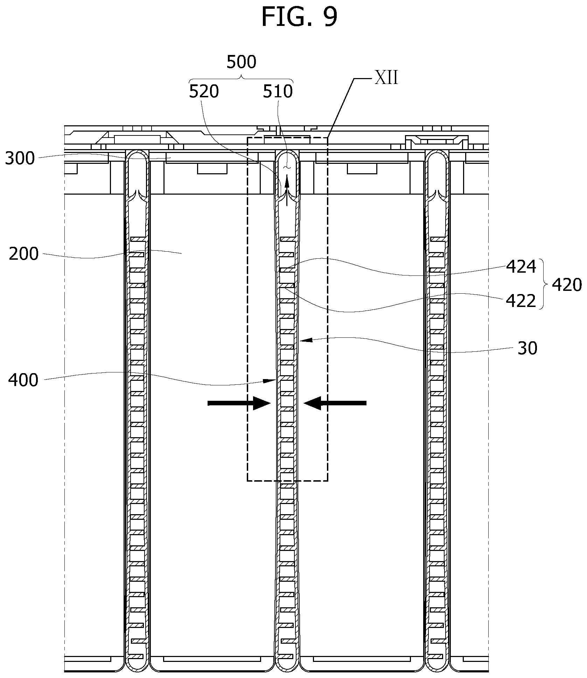

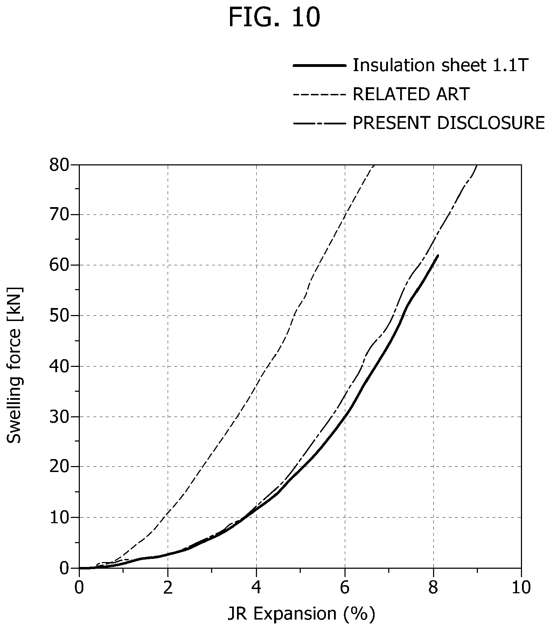

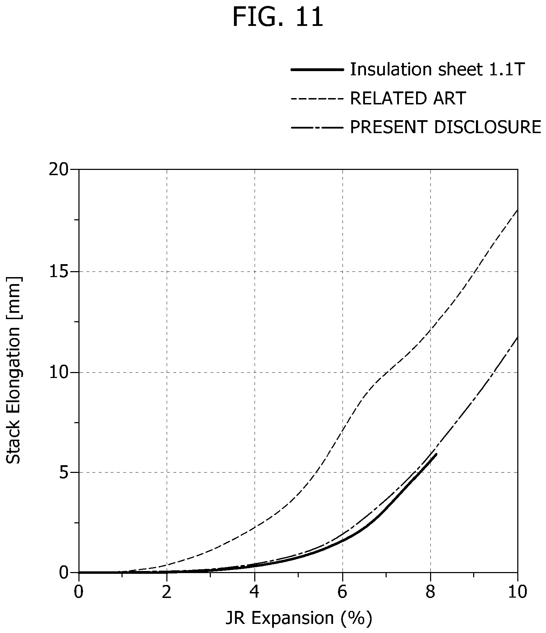

FIG. 9 is a view for describing an operation of the face-to-face cooling plate according to embodiments of the present disclosure, FIG. 10 is a graph showing a swelling force caused by the face-to-face cooling plate according to embodiments of the present disclosure, and FIG. 11 is a graph showing an entire cell stack elongation caused by the face-to-face cooling plate according to embodiments of the present disclosure.

Referring to FIGS. 9 and 11, when swelling of the battery cells 20 occurs, the face-to-face cooling plate 30 may effectively undergo elastic deformation to effectively absorb the deformation of the battery cell 20.

That is, as illustrated in FIG. 9, due to the structure in which the length of the guide rib 420 is reduced as it goes toward the central portion of the battery cell it is possible effectively absorb the displacement occurring at the central portion of the battery cell 20. As illustrated in FIGS. 10 and 11, when the face-to-face cooling plate 30 according to embodiments is applied, a swelling force is reduced and overall elongation of the cell stack is reduced as compared to the related art.

Due to this, the degree to which the battery cells 20 constituting the battery pack physically expand or contract may be reduced, so that the structural stability of the entire battery pack may be maintained, thereby reducing the risk of the battery pack being deformed or damaged.

In addition, when the expansion and contraction of the battery cells 20 are repeated, the internal materials may become fatigued, resulting in reduced performance or damage to the bonding portion between the cells. This fatigue phenomenon may be alleviated, thereby extending the lifetime of the battery, and the battery cells 20 may be uniformly expanded and contracted, and thus the heat distribution may be maintained more uniformly.

Further, the battery pack may be designed more compactly, and thus design flexibility may be improved.

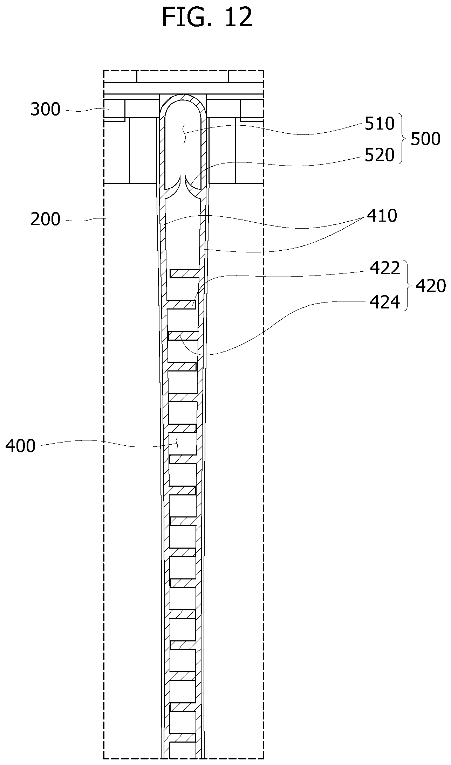

FIG. 12 is an enlarged view of portion XII of FIG. 9. Referring to FIGS. 8 and 12, in embodiments, the face-to-face cooling plate 30 may further include a leakage prevention unit 500.

The leakage prevention unit 500 may function as a component that is provided in the cooling chamber 400 and accommodates cooling fluid when the battery cell 20 swells.

For example, the leakage prevention unit 500 may include an accommodation portion 510 that forms an independent space inside the cooling chamber 400, and an accommodation operation portion 520 that opens the accommodation portion 510 so that the cooling fluid is accommodated in the accommodation portion 510 when the battery cell 20 swells.

The accommodation portion 510 may be provided at an upper end portion of the cooling chamber 400. The accommodation portion 510 may be formed at an upper end of the battery cell 20, that is, at a height corresponding to that of the cap plate 300.

An upper end of the accommodation portion 510 may be rounded. The accommodation portion 510 is for forming a space for accommodating cooling fluid by an action of the accommodation operation portion 520 which will be described below, and may function as a component that forms a wide accommodation space by being formed in a shape which is convex upward.

The accommodation operation portion 520 may include a partition 522 that connects inner facing surfaces of the cooling chamber 400 to be broken by the pressure generated when the battery cell 20 swells.

In addition, a notch 524 may be formed in the partition 522. The notch 524 may be formed in a central portion of the partition 522, and may have a shape of a groove that is concavely recessed upward from a lower surface of the partition 522.

The notch 524 may be formed to extend in a longitudinal direction of the partition 522. That is, the notch 524 may be formed to extend in the second direction.

In this case, the partition 522 may be formed to have a thickness reduced as it goes toward the notch 524.

The lower surface of the partition 522 may be formed to be inclined upwardly in the direction of the notch 524, the notch 524 may be broken when the battery cell 20 swells, two partitions 522 centered on the broken notch 524 may be opened by internal pressure to form a leakage hole, and the cooling fluid may be introduced into the accommodation portion 510 through the leakage hole.

Hereinafter, a face-to-face cooling plate according to embodiments of the present disclosure will be described.

A face-to-face cooling plate 30 according to embodiments may be configured to have only different detailed configuration of the accommodation operation portion 520 according to embodiments of the present disclosure.

Accordingly, in describing the face-to-face cooling plate 30 according to embodiments, only the detailed configuration of the accommodation operation portion 520 that is different from that of the face-to-face cooling plate 30 according to the first embodiment of the present disclosure will be described.

The description of the face-to-face cooling plate 30 according to embodiments of the present disclosure may be applied to remaining components of the face-to-face cooling plate 30 according to embodiments without change.

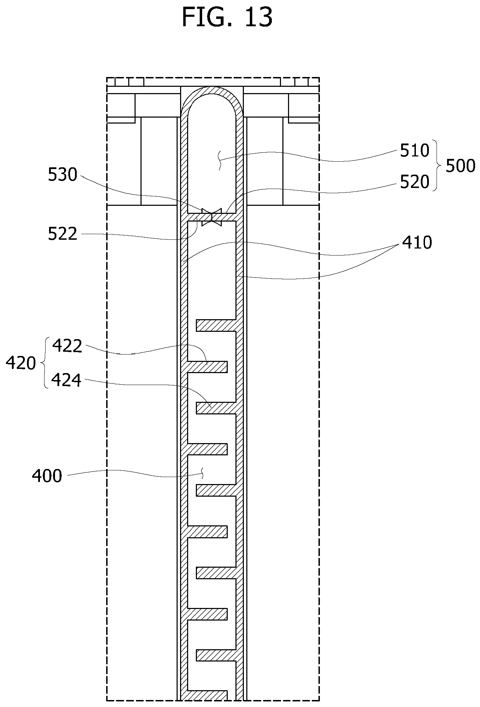

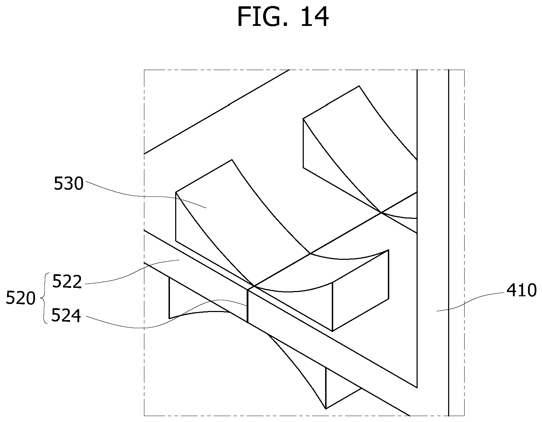

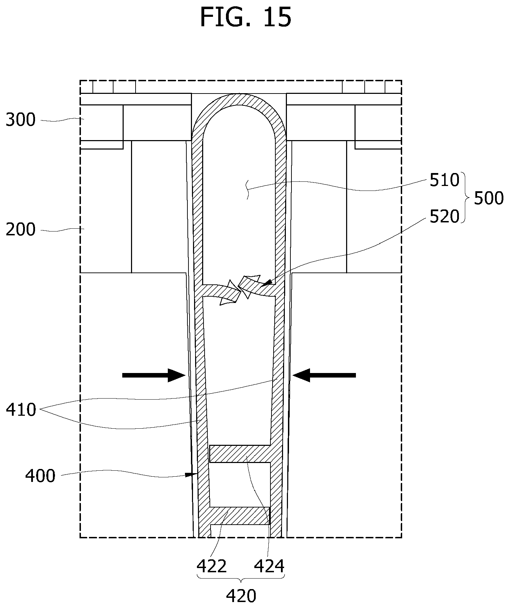

FIG. 13 is a cross-section view schematically illustrating the face-to-face cooling plate according to embodiments of the present disclosure, and FIG. 14 is a perspective view schematically illustrating the face-to-face cooling plate according to embodiments of the present disclosure. FIG. 15 is a view for describing an operation of the face-to-face cooling plate according to embodiments of the present disclosure.

Referring to FIGS. 13 to 15, an accommodation operation portion 520 may include a partition 522 that connects inner facing surfaces of a cooling chamber 400 to be broken by pressure generated when a battery cell 20 swells. In addition, a notch 524 may be formed in a central portion of the partition 522.

Uneven portions 530 may be formed on the partition 522 so that a leakage hole is formed when the partition 522 is broken by the notch 524. The uneven portion 530 may function as a component capable of improving the reliability of forming the leakage hole.

That is, it is possible to prevent an error in which the partition 522 is broken by the notch 524 by the pressure applied to a support plate 410 when the battery cell 20 swells and end portions of the partition 522 that are broken by the notch 524 overlap with each other to block the leakage hole.

Specifically, the uneven portions 530 may be formed on upper and lower surfaces of the partition 522 symmetrically with respect to the notch 524, and may include an inclined surface 530a that guides an end portion of the partition 522 when the partition 522 is broken by the notch 524.

That is, as illustrated in FIG. 13, the partitions 522 may be formed in the form of facing arrows due to the uneven portions 530 formed around the notch 524.

As illustrated in FIGS. 14 and 15, the uneven portions 530 may be disposed in a longitudinal direction of the partition 522 to be spaced apart from one another.

Therefore, in the case in which, when the battery cell 20 swells, the notch 524 is broken by the pressure applied to the support plate 410 and the end portions of the partition 522 are misaligned, the end portions of the partition 522 may be guided by the uneven portions 530 to be raised or lowered, thereby forming a leakage hole between the uneven portions 530.

Due to this, since the reliability of securing the leakage hole is improved, cooling fluid of the cooling chamber 400 may be accommodated in an accommodation portion 510 and the leakage of the cooling fluid may be prevented.

In the present embodiment, although the uneven portions 530 are described as being formed symmetrically around the notch 524 and being formed at upper and lower ends of the partition 522, the uneven portions 530 may be formed only at the upper or lower end of the partition 522.

Hereinafter, a face-to-face cooling plate according to embodiments of the present disclosure will be described.

A face-to-face cooling plate 30 according to embodiments may be configured to have only different detailed configuration of the accommodation operation portion 520 according to embodiments of the present disclosure.

Accordingly, in describing the face-to-face cooling plate 30 according to embodiments, only the detailed configuration of the accommodation operation portion 520 that is different from that of the face-to-face cooling plate 30 according to embodiments of the present disclosure will be described.

The description of the face-to-face cooling plate 30 according to embodiments of the present disclosure may be applied to remaining components of the face-to-face cooling plate 30 according to embodiments without change.

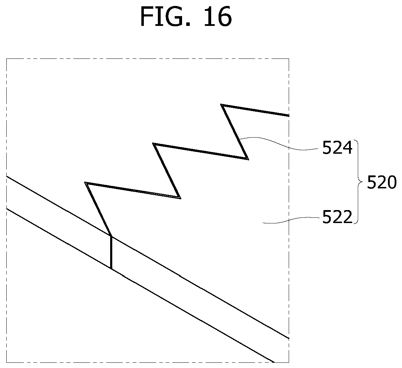

FIG. 16 is a cross-section view schematically illustrating the face-to-face cooling plate according to embodiments of the present disclosure.

Referring to FIG. 16, an accommodation operation portion 520 may include a partition 522 that connects inner facing surfaces of a cooling chamber 400 to be broken by pressure generated when a battery cell 20 swells. In addition, a notch 524 may be formed in a central portion of the partition 522.

The notch 524 may be formed to have a zigzag shape in a longitudinal direction of the partition 522.

The notch 524 may be broken by the pressure applied to the support plate 410 when the battery cell 20 swells and the notch 524 is formed to have a zigzag shape, and thus an end portion of the broken partition 522 may be broken by the notch 524 to have a zigzag shape. In this case, the end portion of the partition 522 may be raised upward by pressure applied from below to form a leakage hole.

Due to this, since the reliability of securing the leakage hole is improved, cooling fluid of the cooling chamber 400 may be accommodated in an accommodation portion 510 and the leakage of the cooling fluid may be prevented.

Hereinafter, a face-to-face cooling plate according to embodiments of the present disclosure will be described.

A face-to-face cooling plate 30 according to embodiments may be configured to have only different detailed configuration of the accommodation portion 510 according to embodiments of the present disclosure.

Accordingly, in describing the face-to-face cooling plate 30 according to embodiments, only the detailed configuration of the accommodation portion 510 that is different from that of the face-to-face cooling plate 30 according to embodiments of the present disclosure will be described.

The description of the face-to-face cooling plate 30 according to embodiments of the present disclosure may be applied to remaining components of the face-to-face cooling plate 30 according to embodiments without change.

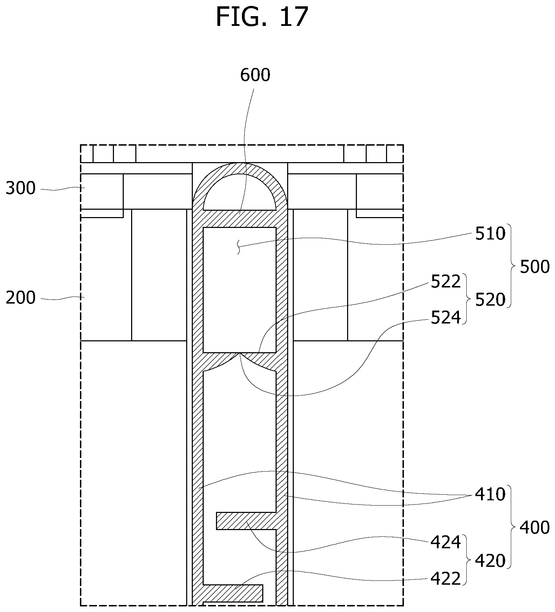

FIG. 17 is a cross-section view schematically illustrating the face-to-face cooling plate according to embodiments of the present disclosure.

Referring to FIG. 17, an accommodation portion 510 according to embodiments may include a reinforcing rib 600. The reinforcing rib 600 that corresponds to a welding portion of a cap plate 300 and crosses the accommodation portion 510 may be formed inside the accommodation portion 510.

The cap plate 300 and a cell case 200 of a battery cell 20 are assembled and fixed by welding, and stress may be generated at the welding portion of the cap plate 300 and the cell case 200 when the battery cell 20 swells, and the welding portion may be broken.

The reinforcing rib 600 according to embodiments may function as a component that prevent the breakage of the welding portion of the cap plate 300 and the cell case 200.

The reinforcing rib 600 may be formed at a height corresponding to that of the welding portion of the cap plate 300 and the cell case 200.

An outer side surface of the accommodation portion 510 may be supported by the reinforcing rib 600, so that when the swelling of the battery cells 20 occurs, the cooling chamber 400 region may absorb the displacement caused by the swelling, and the outer side surface of the accommodation portion 510 may support the welding portion of the cap plate 300 and the cell case 200 to prevent the breakage of the welding portion of the cap plate 300 and the cell case 200. Due to this, it is possible to prevent a sudden decrease in lifetime of a battery.

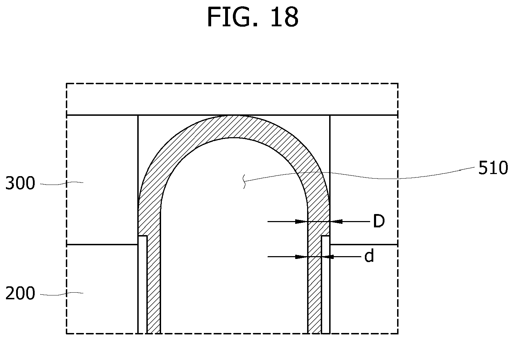

FIG. 18 is a view illustrating a modified example of the reinforcing rib of the face-to-face cooling plate according to embodiments of the present disclosure.

Referring to FIG. 18, the reinforcing rib 600 is removed, and a thickness D of the accommodation portion 510 itself may become thicker.

The accommodation portion 510 is formed to have a thickness greater than a thickness d of the cooling chamber 400, and thus may support the welding portion of the cap plate 300 and the cell case 200 to prevent the breakage of the welding portion.

According to the present disclosure, it is possible to prevent a sudden decrease in lifetime of a battery by absorbing the displacement occurring when the battery cell swells.

According to the present disclosure, by providing an accommodation portion capable of accommodating coolant when swelling compression occurs, it is possible to prevent coolant from leaking.

According to the present disclosure, since overall elongation of a cell stack is reduced by a structure in which coolant can be accommodated in an accommodation portion, the design burden on a structure of a sidewall of the cell stack can be reduced, and in particular, a reinforcing rib corresponding to a welding portion of a cap plate can be formed in the accommodation portion to prevent the breakage of the welding portion caused by swelling.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

## Claims

1. A face-to-face cooling plate comprising:
a cooling chamber which is provided between battery cells and forms a space therein so that a cooling fluid is circulated; and
a leakage prevention unit which is provided in the cooling chamber, and accommodates the cooling fluid when a battery cell swells.

2. The face-to-face cooling plate as claimed in claim 1, wherein the cooling chamber includes:
a pair of support plates disposed to be spaced apart from one another; and
guide ribs formed on inner surfaces of the support plates.

3. The face-to-face cooling plate as claimed in claim 2, wherein the guide ribs include:
a first guide rib formed to protrude from the inner surface of the support plate at one side; and
a second guide rib formed to protrude from the inner surface of the support plate at another side, and
the first guide rib and the second guide rib are formed to protrude in an alternating manner.

4. The face-to-face cooling plate as claimed in claim 2 or claim 3, wherein a length of the guide ribs is reduced toward a central portion of the battery cell.

5. The face-to-face cooling plate as claimed in any of claims 2 to 4, wherein the leakage prevention unit includes:
an accommodation portion configured to form an independent space inside the cooling chamber; and
an accommodation operation portion configured to open the accommodation portion so that the cooling fluid is accommodated in the accommodation portion when the battery cell swells.

6. The face-to-face cooling plate as claimed in claim 5, wherein the accommodation operation portion includes a partition that connects inner facing surfaces of the cooling chamber to be broken by pressure generated when the battery cell swells.

7. The face-to-face cooling plate as claimed in claim 6, wherein a notch is formed in the partition.

8. The face-to-face cooling plate as claimed in claim 7, wherein a thickness of the partition is reduced toward the notch.

9. The face-to-face cooling plate as claimed in claim 7 or claim 8, wherein the notch is formed to have a zigzag shape.

10. The face-to-face cooling plate as claimed in any of claims 7 to 9, wherein an uneven portion is formed on the partition so that a leakage hole is formed when the partition is broken by the notch.

11. The face-to-face cooling plate as claimed in claim 10, wherein the uneven portion is formed on upper and lower surfaces of the partition substantially symmetrically with respect to the notch, and
an inclined surface is formed to guide a broken portion of the partition when the partition is broken by the notch.

12. The face-to-face cooling plate as claimed in any of claims 5 to 11, wherein an upper end of the accommodation portion is rounded and the accommodation portion is disposed to correspond to a cap plate of the battery cell.

13. The face-to-face cooling plate as claimed in claim 12, wherein a reinforcing rib that corresponds to a welding portion of the cap plate and crosses the accommodation portion is formed inside the accommodation portion.

14. The face-to-face cooling plate as claimed in claim 12 or claim 13, wherein a thickness of the upper end of the accommodation portion is greater than a thickness of the support plate.

15. A battery pack comprising:
a housing;
a plurality of battery cells disposed in the housing; and
one or more of the face-to-face cooling plates according to any preceding claim disposed between the plurality of battery cells.
